# EUROPEAN PATENT APPLICATION

(11) **EP 4 834 128 A1**
(43) Date of publication of application: **04.11.2026**
(21) Application number: 25173806.8
(22) Date of filing: 30.04.2025
(51) Int. Cl.: A23P 20/12, A23P 20/18

(54) **DRY COATING MODULE AND COATING SYSTEM**

(71) Applicant: Günther Maschinenbau GmbH, 64859 Eppertshausen (DE)
(72) Inventor: LEHNEN, Frank, 54316 Schöndorf (DE)
(74) Representative: Eisenführ Speiser

(57) **Abstract**

The invention relates to a dry coating module (1) for coating food products with a granular coating material, comprising: a base frame (3), a conveyor unit (5) comprising at least one conveyor (11) for conveying a food product from a product inlet (7) to a product outlet (9), a coating unit (19) above the conveyor (11) for pouring granular coating material onto the conveyor (11), and a bed (33) for collecting excess coating material, wherein at least a conveyor segment of the conveyor (11) is reversibly movable from an operating position (101) to a cleaning position (103), wherein a vertical gap (G) between at least a portion of the conveyor (11) and the bed (33) is increased when the conveyor (11) is moved from the operating position (101) to the cleaning position (103). The invention further relates to a wet coating module (200) and to a coating system (300).

## Description

The invention relates to dry coating module for coating food products with a granular coating material, to a wet coating module for coating food products with a liquid coating material and to a coating system comprising a dry coating module and a wet coating module.

Food products, such as pieces of meat or fish, often need to be coated or dusted with a granular coating material. Typically, pieces of meat or fish are coated with breadcrumbs or flour before being processed further. In particular, in large scale production of convenience food products, coated food products are frozen and or deep-fried after the coating has been applied. Coating of the food product can be done by hand. However, for productions on a larger scale, coating modules or coating systems comprising multiple coating modules are known. In the production of fish-sticks, for example, a pre-formed piece of fish is often coated with a liquid batter in a wet coating module before being transported to a dry coating module to be coated with a granular coating material.

A dry coating machine typically comprises a conveyor unit for conveying a food product from a product inlet to a product outlet and a coating unit for pouring granular coating material onto the conveyor and a food product positioned on the conveyor. At least some of the coating material falls through or past the conveyor and accumulates below the conveyor, for example, on a bed of the dry coating module. Edible substances such as the food products to be coated and the coating material spoil quickly. It is therefore necessary to regularly remove all remainders of the food products and coating material from the coating module in order to ensure safety of consumers and high quality of the food products. In most countries, regulations or the like specify regular cleaning of machines used in food production. In many cases, food production machines are therefore cleaned at least once a day. It follows from this, that the time required for cleaning a food production machine has a big impact on the overall operating costs of such machines.

It is thus an object of the present invention to provide a dry coating module, a wet coating module and a coating system that facilitate fast and thorough cleaning.

According to a first aspect, the invention solves the problem with a dry coating module as defined in independent claim 1. Preferred configurations of the claimed invention are defined in dependent claims 2 to 13. In particular, the invention achieves the above mentioned object with a dry coating module for coating food products with a granular coating material, the dry coating module preferably comprising: a base frame, a conveyor unit for conveying a food product in a conveying direction from a product inlet to a product outlet, wherein the conveying direction is preferably oriented at least approximately horizontally, and wherein the conveyor unit comprising at least one conveyor. Preferably, the dry coating module further comprises a coating unit, in particular a coating unit for pouring granular coating material onto the conveyor and a food product positioned on the conveyor. Preferably, the coating unit is arranged above the conveyor in a vertical direction. The dry coating module preferably comprises a bed for collecting excess coating material. The bed can extend at least along a section of the conveyor in the conveying direction. The bed is preferably arranged below the conveyor in a vertical direction. Preferably, at least a conveyor segment of the conveyor is reversibly movable from an operating position to a cleaning position. A vertical gap between at least a portion of the conveyor (or the conveyor segment) and the bed can be increased when the conveyor is moved from the operating position to the cleaning position.

The base frame can be a structural component or framework configured to establish a stable and substantially rigid platform upon which other functional elements are mounted or integrated. The base frame preferably serves to maintain the relative positioning and orientation of these elements during operation. The base frame can be a movable base frame, in particular movable on casters or the like, or can be a stationary base frame that may be provided with leveling feet.

The conveyor unit is preferably configured to convey food products from the product inlet to the product outlet. Food products can be provided without a dry coating at the product inlet and can be provided to the product outlet with a dry coating. Preferably, the conveying direction extends from the product inlet to the product outlet. The conveying direction is preferably oriented at least approximately horizontally. However, it shall be understood that a conveying direction that is oriented at least approximately horizontally does not require a conveyor unit that is strictly horizontal. The conveyor unit or some segments thereof can be sloped or angled with regard to a horizontal plane. The horizontal orientation of the conveying direction specifies that a food product is moved at least to some extent in a horizontal direction between the product inlet and the product outlet. The conveyor unit comprises at least one conveyor. The conveyor preferably is or comprises a chain conveyor, a belt conveyor, a roller conveyor, a modular belt conveyor and/or a slat conveyor. The conveyor unit can also comprises multiple conveyors of the same and/or of different types.

The coating unit is configured to provide granular coating material onto a food product positioned on the conveyor and/or on the conveyor. Preferably, the coating unit is configured for pouring the granular coating material onto the conveyor and/or a food product positioned on the conveyor. In the context of the present disclosure, pouring means a movement of granular coating material that is at least partially due to gravity. A tilting of the coating unit or a part of the coating unit is not required. The preferred arrangement of the coating unit above the conveyor in a vertical direction allows gravity driven of the granular coating material. It shall be understood that not the entire coating unit must be arranged above the conveyor. Only a part from which at least some granular coating material can be provided onto the food product can be arranged above the conveyor. The coating unit can be configured to provide a curtain of granular coating material. The conveyor unit or a conveyor thereof can extend through the curtain.

The bed is preferably provided for collecting excess coating material, in particular coating material that is poured from the coating unit but does not immediately stick to the surface of a food product. The bed can be attached to the base frame. The bed can form a basin or tray. For example and preferably, the bed can have a bottom and at least one side well extending at an angle from the sidewall, particularly preferred substantially perpendicular to the side wall. Excess material can accumulate in the tray. The bed is preferably arranged below the conveyor in the vertical direction. In some embodiments, the bed can be arranged between an upper run of the conveyor and a lower run of the conveyor. Preferably, the bed is arranged below both runs of the conveyor. The bed can be part of the base frame, attached to the base frame directly or via intermediate components and/or can be removably attached to the base frame.

Preferably, at least a conveyor segment of the conveyor, particularly preferred at least one conveyor of the conveyor unit, is reversibly movable from an operating position to a cleaning position. If the conveyor unit comprises more than one conveyor, more than one conveyor, preferably all conveyors of the conveyor unit, can be movable from an operating position to a cleaning position. The operating position is a position that the conveyor or its segment has during operating of the dry coating module for coating food products. The cleaning position is a different position than the operating position. The cleaning position is particularly suited for cleaning of at least some part of the dry coating module. For example, a lower side of the conveyor and/or the bed can be easily accessible for cleaning when the at least one conveyor segment is in the cleaning position.

Preferably, a vertical gap between the at least a portion of the conveyor and a portion of the bed is increased when the conveyor is moved from the operating position to the cleaning position. In other words, the vertical gap between at least a portion of the conveyor and a portion of the bed below said portion of the conveyor is larger when the conveyor segment is in the cleaning position than it is when the conveyor segment is in the operating position.

The inventors have found that in particular a bed below a conveyor is difficult to clean. At the same time, a lot of excess coating material can accumulate in a gap between the conveyor and the bed or on the bed respectively. By allowing at least a segment of the conveyor to be moved, cleaning of the dry coating module is facilitated. For example, pointing a water jet on dirty spot of the bed is facilitated if a gap between the conveyor and the bed is increased. It shall be understood that the segment of the conveyor and/or the entire conveyor can have multiple cleaning positions. In each of the cleaning positions, a vertical gap between the conveyor segment and the bed is increased when compared to the cleaning position.

The segment of the conveyor can be continuously movable and/or can have one or more discrete cleaning positions.

It shall be understood that in some embodiments, the dry coating module must not have a conveyor segment that is reversibly movable form an operating position to a cleaning position. In such embodiments, cleaning of the dry coating module may be facilitated in another suitable manner, in particular as described below as preferred configurations.

According to a first preferred embodiment, the bed comprises a bed discharge opening for discharging excess coating material. Preferably, the dry coating module comprises a lower coating material container. The lower coating material container can be a removable container. The discharge opening can extend in a horizontal plane. Preferably, the discharge opening is provided in a lowermost section of the bed. The lowermost section defines the lowest point of the bed in the vertical direction. Preferably, the bed comprises a funnel portion, wherein the bed discharge opening forms a discharge opening of the funnel portion.

Preferably, the conveyor segment of the conveyor is pivotable around a pivot axis from the operating position to the cleaning position. In some embodiments, the entire conveyor is pivotable around the pivot axis from the operating position to the cleaning position. The pivot axis preferably extends transverse to the conveying direction and/or the vertical direction. Preferably, the pivot axis extends substantially horizontally. It shall be understood that at a portion of the conveyor segment through which the pivot axis extends, the vertical gap between the conveyor segment and the bed must not increase upon movement of the conveyor segment to the cleaning position.

It is further possible that the pivot axis preferably extends not only transverse to the conveying direction and/or the vertical direction, but also with an angle to the horizontal, such that the pivot direction of the conveyor or the segment of the conveyor includes a lateral component. Thereby, the vertical gap between the conveyor segment and the bed may further be increased at least at one side of the conveyor.

Preferably, at least a portion of the pivot axis is arranged above the discharge opening in the vertical direction. It shall be understood that in particular a portion of the pivot axis that extends through the conveyor segment or a part of the conveyor segment can be arranged above the discharge opening. By arranging the pivot axis above the discharge opening, cleaning of a section of the conveyor segment through which the pivot axis extends is facilitated as the respective section is accessible via the discharge opening. Through this a portion of the conveyor or conveyor segment that is not moved away from the bed by the pivoting motion is can also be cleaned easily. However, it shall be understood that cleaning of the dry coating module can be facilitated even without the arrangement of the pivot axis above the discharge opening.

Preferably, the at least one conveyor or the at least one segment of the conveyor is pivotable around the pivot axis by at least 10°, preferably by at least 12.5°, preferably by at least 15°, preferably by at least 17.5°, preferably by at least 20°, preferably by at least 22.5°, preferably by at least 25°, preferably by at least 27.5°, preferably by at least 30°, preferably by at least 32.5° preferably by at least 35°, preferably by at least 37.5°, preferably by at least 40°, preferably by at least 42.5°, preferably by at least 45°, preferably by at least 47.5°, preferably by at least 50°, preferably by at least 52.5°, preferably by at least 55°, preferably by at least 57.5°, preferably by at least 60° preferably by at least 62.5°, preferably by at least 65°, preferably by at least 67.5°, preferably by at least 70°, preferably by at least 72.5°, preferably by at least 75°.

In some embodiments, the pivot axis is provided at a center portion of the dry coating module arranged between the product inlet and the product outlet in the conveying direction or with regard to the conveying direction respectively.

The conveyor segment preferably comprises at least a conveyor belt segment, a conveyor chain segment, a slat conveyor segment and/or a modular belt conveyor segment. It shall be understood that the respective segment can change when the conveyor is operated. In some embodiments the conveyor segment comprises an entire conveyor belt, a conveyor chain, a slat conveyor and/or a modular belt conveyor. The conveyor segment preferably further comprises at least two guide rollers for guiding the conveyor belt segment, conveyor chain segment, slat conveyor segment and/or modular belt conveyor segment. In particularly preferred configurations, the pivot axis extends through a pivot roller of the at least two guide rollers or one of the two guide rollers thus forming a pivot roller respectively.

In some embodiments, the pivot roller is a drive roller for driving the conveyor belt, conveyor chain, slat conveyor and/or modular conveyor. A drive roller is a roller that transfers driving forces onto the conveyor. The drive roller can be driven, by an external drive device, for example via a shaft, a gear or a belt, and/or can be a self-driven roller comprising an internal motor. The other guide roller can be a passive non-drive roller.

In preferred configurations of the dry coating module, the conveyor unit comprises at least one conveyor support frame. The conveyor support frame can be configured for and/or can support at least the conveyor segment of the conveyor. Preferably, the support frame and the conveyor segment supported thereon are pivotable around the pivot axis for moving the conveyor from the operating position to the cleaning position. In other embodiments, the conveyor can be pivotable relative to the conveyor support frame.

Preferably, the conveyor support frame comprises a support portion, the support portion being rotatably supported at the base frame and/or the bed. For example, the support portion of the conveyor support frame can comprise one or more pins. The pin can be rotatably supported in a pin hub. The pin hub can be formed in the base frame and/or the bed and/or can be attached to the base frame and/or the bed. Preferably, the drive roller and/or a shaft for driving the conveyor segment is rotatably supported at the conveyor support frame. A drive shaft for driving the conveyor, in particular for driving the drive roller, preferably extends through the support portion supporting the support frame at the base frame. The support portion of the conveyor support frame can comprise one or more bearings rotatably supporting the drive shaft.

Preferably, the dry coating module further comprises a gas pressure damper for assisting a movement of the conveyor segment from the operating position to the cleaning position and/or for holding the conveyor in the cleaning position. A gas pressure damper may also be referred to as gas spring or gas strut. In other embodiments, a biasing element, in particular a spring, may be provided. The biasing element can bias the conveyor segment towards its cleaning position. The biasing element can assist movement of the conveyor segment from the operating position to the cleaning position. The gas pressure damper or biasing element respectively can facilitate handling of the conveyor segment and can thus facilitate cleaning of the dry coating module.

The dry coating module can comprise a drive unit for driving at least the conveyor segment of the at least one conveyor.

Preferably, the conveyor unit comprises an inlet conveyor configured to receive food products to be coated at the product inlet. The inlet conveyor can be configured to convey the products in the conveying direction to a transition section. Preferably, the conveyor unit comprises an outlet conveyor configured to convey products, in particular products received at the transition section, in the conveying direction and to discharge coated food products at the product outlet. Preferably, at least one of the inlet conveyor and the outlet conveyor forms or comprises the movable conveyor segment. The inlet conveyor and the outlet conveyor can be positioned next to each other in the conveying direction. In other embodiments, one or more intermediate conveyors can be provided in between the inlet conveyor and the outlet conveyor in the conveying direction. Such an intermediate conveyor can also comprise a conveyor segment that is reversibly movable from an operating position to a cleaning position or the entire intermediate conveyor may be reversibly movable from an operating position to a cleaning position.

Preferably, the dry coating module comprises a drive unit. The drive unit can comprise a motor, in particular an electric motor. The drive unit can further comprise a transmission, such as a gear, a toothed belt or the like. The drive unit can be configured to drive at least a conveyor section of the inlet conveyor and a conveyor section of the outlet conveyor. According to the preferred embodiment, both the segment of the inlet conveyor and the segment of the outlet conveyor can be driven via a single drive unit, in particular via a single motor. Preferably, the drive unit is configured to drive the sections of the inlet conveyor and the outlet conveyor uniformly.

In some embodiments, the drive unit comprises a drive gear engaging an inlet drive pinion of an inlet drive shaft for driving the inlet conveyor and an outlet drive pinion of an outlet drive shaft for driving the outlet conveyor. By providing a drive gear engaging both the inlet drive pinion and the outlet drive pinion, a predetermined speed ratio of the rotational speed of the inlet drive shaft and the outlet drive shaft can be ensured. This can help to increase product quality as variations in a movement speed of the conveyors can damage products that are transferred between the inlet conveyor and the outlet conveyor.

Preferably, a wedge element, in particular a static wedge element, is provided at the transition section for bridging a gap between the inlet conveyor and the outlet conveyor. It shall be noted that a static wedge element can be removable.

The dry coating module can comprise holding means for holding the at least one conveyor in the operating position. For example and preferably, the holding means can include a catch that engages a corresponding element, in particular a pin, of the conveyor segment and/or the conveyor support frame. The holding means can alternatively or additionally include a latch. For example and preferably, a latch of the conveyor segment and/or the conveyor support frame can be configured to engage a latch hole in the base frame and/or the bed for holding the at least one conveyor segment in the operating position.

Preferably, the dry coating module further comprises a coating material supply unit for providing coating material to the coating unit. In particular, the coating material supply unit can be configured to supply coating material to the coating unit from the lower coating material container. The coating material supply unit can be configured to supply at least a portion of excess coating material to the coating unit for re-use and/or to supply fresh coating material to the coating unit.

Preferably, the coating material supply unit comprises a screw conveyor comprising at least one rotatable conveyor screw for conveying the granular coating material. The coating material supply unit can comprise a conveyor housing. The conveyor screw preferably extends along a screw axis. Preferably, the conveyor screw is at least partially received in the conveyor housing.

In some preferred embodiments, the conveyor housing comprises a first housing shell and a second housing shell. The housing shells can be connected by a hinge. A hinge axis of the hinge preferably extends substantially parallel to the screw axis of the conveyor screw. Providing a housing with at least two housing shells that are connected via a hinge, allows the housing to be opened. This facilitates cleaning of the coating material supply unit. It shall be understood that embodiments comprising a coating material supply unit that facilitates cleaning are preferred independently from a conveyor segment being movable from an operating position to a cleaning position. For examples, embodiments that only have a coating material supply unit that facilitates cleaning, in particular by having two shells connected by a hinge, are also preferred in combination with a conveyor that is not movable to a cleaning position.

Preferably, the conveyor housing comprises an outlet opening for discharging granular coating material. The outlet opening is preferably arranged asymmetrically with respect to the screw axis of the conveyor screw, in particular when viewed perpendicular to an opening plane of the outlet opening and/or along a discharge direction in that the coating material is discharged from the conveyor housing through the outlet opening. Additionally or alternatively, the outlet opening can be in a housing surface oriented towards the coating unit. The outlet opening can be positioned parallel to the screw axis. Preferably, the screw axis does not form a symmetry axis of the outlet opening when viewed perpendicular to the housing surface oriented towards the coating unit.

Preferably, the coating material supply unit comprises an outlet guide for guiding the coating material away from the outlet opening in a discharge direction. Preferably, the outlet guide is provided off-center with regard to the conveyor housing.

Preferably, the bed is open towards the top. A bed open towards the top is not fully enclosed by other elements of the coating module. In particular, no housing is provided completely around a bed open towards the top.

In some preferred embodiments, the coating unit comprises an upper coating material container defining a storage space for granular coating material. The upper coating material container preferably comprises a door for accessing the storage space. The door is preferably arranged in one of the front side or the rear side of the coating unit referred to the conveying direction. The door may also be provided at the left side or the right side of the coating unit when viewed along the conveying direction from the inlet to the outlet.

The upper coating material container preferably comprises a fill opening for filling the upper coating material container with granular coating material. The filling opening is preferably arranged in a top region of the upper coating material container. The coating unit preferably comprises at least one distribution plate. The distribution plate can be arranged below the fill opening. Preferably, the at least one distribution plate is attached to the door for accessing the storage space.

Preferably, the upper coating material container comprises a coating opening for discharging granular material onto the conveyor. The coating opening can be an adjustable opening, in particular, the coating opening can be adjustable via an adjustment mechanism of the coating unit. Preferably, the adjustment mechanism is attached to the door. Thereby, the adjustment mechanism may be pivoted away from the upper coating material container, such that cleaning of the upper coating material container is further facilitated.

In some preferred embodiments, the upper coating material container comprises a removable bottom. The bottom may preferably be manually removable attached to the upper coating material container, preferably tool-less.

The dry coating module preferably comprises an air knife unit for removing loose or excess coating material from a coated food product. The air knife unit is preferably provided downstream of the coating unit in the conveying direction. Preferably, the air knife unit includes at least one jet nozzle for providing an air jet onto a surface of the coated food product. The air knife unit and or the air nozzle can be pivotably attached to the base frame.

Preferably, the jet nozzle is angle adjustable such that an angle between an air jet provided from the jet nozzle and a surface of the conveyor unit carrying a coated food product is adjustable.

The air knife unit preferably comprises an air knife housing defining a treatment space, wherein the air knife housing comprises an inlet opening and an outlet opening. The treatment space is preferably accessible via the inlet opening and the outlet opening. Preferably, the jet nozzle is provided in the treatment space.

In some preferred further developments, the air knife unit comprises a flexible inlet screen at least partially covering the inlet opening. The inlet screen is configured to be displaced by a coated food product to allow the food product to enter the treatment space. Additionally or alternatively, the air knife unit can comprise a flexible outlet screen at least partially covering the outlet opening, wherein the outlet screen can be displaced by a coated food product to allow the food product to leave the treatment space. Providing an inlet screen and/or an outlet screen helps keeping excess coating material removed from the surface of the food product by the air jet ejected from the jet nozzle in the treatment space. The inlet screen and/or the outlet screen can comprise a slatted curtain, a flexible rubber lip or stripe-shaped brush.

The dry coating module can comprise a control device for controlling operation of the dry coating module. The control device is preferably configured to control the drive unit, the coating material supply unit and/or the coating unit. For example and preferably, the control device is configured to control the adjustment mechanism for adjusting a size of the opening of the upper coating material container.

The control device can be configured to control the drive unit to drive the at least one conveyor segment of the at least one conveyor at an operating speed and at a cleaning speed lower than the operating speed. Preferably, the control device is configured to control the drive unit to drive the at least one conveyor segment of the at least one conveyor, when the conveyor segment is in the cleaning position.

Preferably, the dry coating module further comprises adjustment means configured to adjust the operating position of the conveyor segment of the at least one conveyor.

In some preferred embodiments, the dry coating module comprises a pressing device arranged downstream of the coating unit. The pressing device is preferably configured to press coating material provided onto a food product by the coating unit onto the surface of the food product. The pressing device can comprise a pressing element, in particular a pressing roller. Preferably, the pressing element is biased towards the conveyor unit or a conveyor of the conveyor unit. A height of the pressing device with respect to a surface of the conveyor and/or a pressing force provided by the pressing device can be adjustable.

According to a second aspect, the invention achieves the objective specified above with a wet coating module for coating food products with a liquid coating material, the wet coating module comprising a base frame, a conveying unit for conveying a food product in a conveying direction from a product inlet to a product outlet, the conveyor unit preferably comprising at least one conveyor, a liquid coating unit preferably configured to form at least one coating material curtain flowing from the liquid coating unit to the conveyor; and/or a bed extending at least along a section of the conveyor in the conveying direction, wherein the bed preferably defines a basin for forming a liquid batter pool. The conveyor unit preferably extends through the basin. The wet coating module preferably further comprises a level adjustment unit for controlling a surface level of the liquid batter pool formed in the basin.

In preferred configurations, the wet coating module further comprises an air knife unit for removing excess coating material from a coated food product, wherein the air knife unit is provided downstream of the coating unit in the conveying direction and includes at least one jet nozzle for providing an air jet onto a surface of the coated food product.

It shall be understood that the wet coating module according to the second aspect of the invention and the dry coating module according to the first aspect of the invention comprise similar and identical embodiments which are in particular described in the dependent claims. In so far, reference is made to the above description of the dry coating module according to the first aspect of the invention. In particular, the conveyor unit of the wet coating module can have similar features as those described above for the preferred embodiments of the dry coating module of the first aspect of the invention. For example and preferably, at least a segment of a conveyor of the wet coating module can be movable from an operating position to a cleaning position.

According to a third aspect, the invention achieves the above-described objective with a coating system comprising a dry coating module, in particular a dry coating module according to any of the preferred embodiments of the first aspect of the invention, and a wet coating module, in particular a wet coating module according to any of the preferred embodiments of the second aspect of the invention. Preferably, the dry coating module is arranged downstream of the wet coating module with regard to a conveying direction of the coating system. Preferably, the coating system comprises a control device for controlling both the dry coating module and the wet coating module. Preferably, the control device is a control device of the wet coating module and/or the dry coating module. In particular only one of the wet coating module and the dry coating module can comprise a control device. Alternatively, both the wet coating module and the dry coating module can comprise a control device. Preferably, the control device of the dry coating module is configured as a master unit and the control device of the wet coating module is configured as a slave unit that follows instructions provided by the master unit. Alternatively, the control device of the wet coating module can be configured as a master unit and the control device of the dry coating module can be configured as a slave unit that follows instructions provided by the master unit.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth.

In the accompanying figures,
- Fig. 1: shows a perspective view of a preferred embodiment of a dry coating module with conveyors in an operating position;
- Fig. 2: shows another perspective view of the dry coating module with the conveyors in an operating position;
- Fig. 3: shows a bed of the dry coating module:
- Fig. 4: shows a lateral detail view of a coating unit and a coating material supply unit of the dry coating module;
- Fig. 5: shows a lateral cut view of a section of the dry coating module;
- Fig. 6: shows a rear view of the dry coating module in a cleaning state;
- Fig. 7: shows a perspective view of the dry coating module in the cleaning state with conveyors in a cleaning position;
- Fig. 8: shows a lateral cut view of the dry coating module in the cleaning position with the conveyors in the cleaning position;
- Fig. 9: shows a detail view illustrating a support of conveyor support frames of the dry coating module on a base frame of the dry coating module;
- Fig. 10: shows a perspective view of a preferred embodiment of a wet coating module with conveyors in an operating position;
- Fig. 11: shows a lateral cut view of the wet coating module; and
- Fig. 12: shows a coating system comprising a dry coating module and a wet coating module.

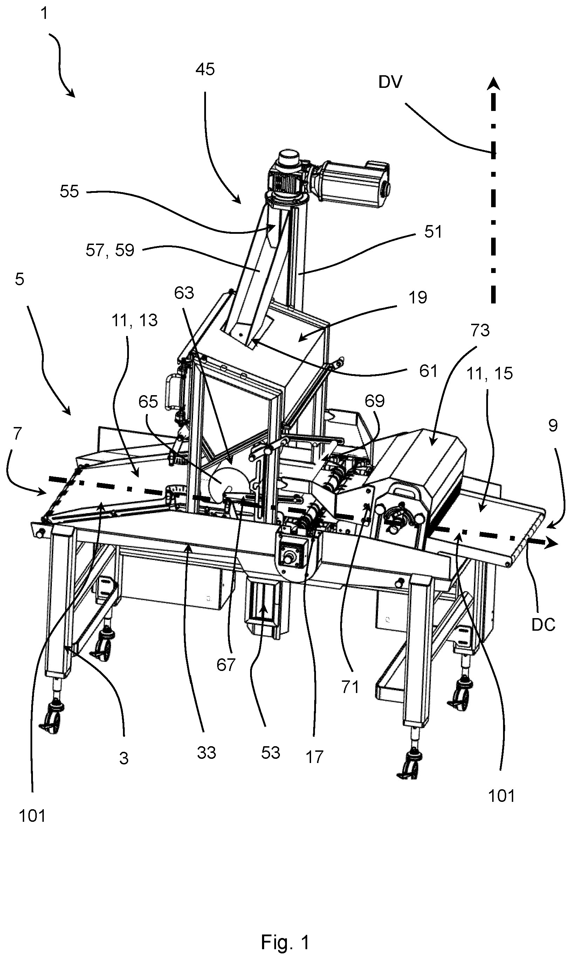

Fig. 1 illustrates a preferred embodiment of a dry coating module 1. The dry coating module 1 comprises a base frame 3. In the embodiment of Fig. 1, the base frame 3 comprises four casters such that the dry coating module 1 is movable. The casters can be height adjustable to facilitate incorporating the dry coating module 1 in a coating system. Moreover, the caster can be locked to fix the dry coating module 1 in position.

The base frame 3 carries a conveyor unit 5 that is configured to convey food products from a product inlet 7 to a product outlet 9 opposite the product inlet 7 along a conveying direction DC. In the preferred embodiment shown in the figures, the conveying direction DC is oriented at least approximately horizontally. At least a part of a movement of a food product transported through the dry coating module 1 is thus a horizontal movement.

The conveyor unit 5 comprises two conveyors 11, in particular an inlet conveyor 13 and outlet conveyor 15. The inlet conveyor 13 is configured to receive food products to be coated at the product inlet 7 and to convey the received food products in the conveying direction DC to a transition section 17. The outlet conveyor 15 is arranged downstream of the inlet conveyor 13 in the conveying direction DC. The outlet conveyor 15 receives food products from the inlet conveyor 13 at the transition section 17 and conveys the then coated food products to the product outlet 9.

For applying a coating to the food products conveyed through the dry coating module 1 in the conveying direction DC by the conveyor unit 5, the dry coating module 1 comprises a coating unit 19. The coating unit 19 is configured to pour a granular coating material, such as bread crumbs or flour, onto a surface of a conveyor 11 and a food product positioned on this surface of the conveyor 11. Here the granular coating material is applied by gravity. The coating unit 19 is provided above the conveyor unit 5 in a vertical direction DV. In particular, the granular coating material can fall from an upper coating material container 21 of the coating unit 19 through a coating opening 23 of the upper coating material container 21.

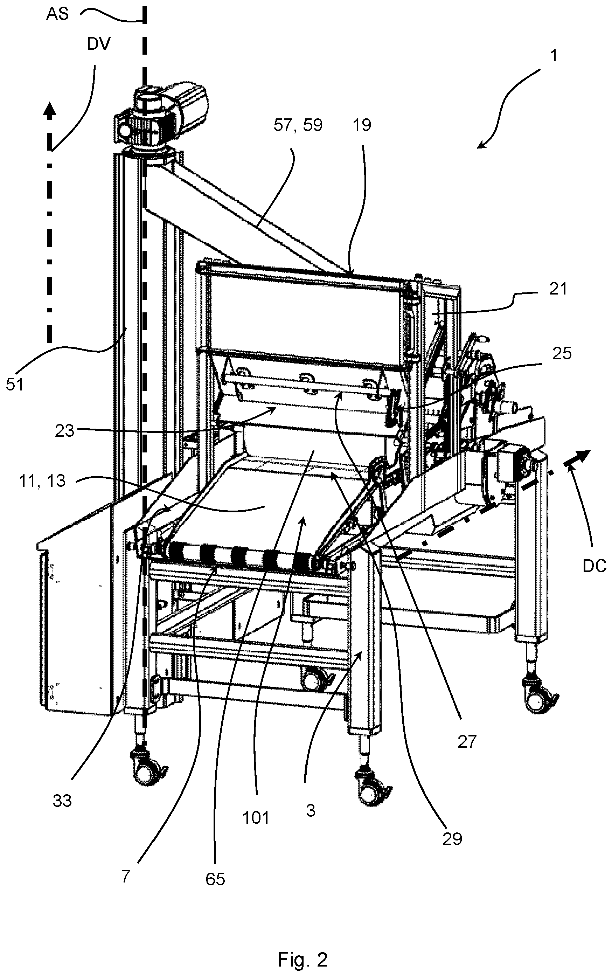

As shown in Fig. 2, the coating opening 23 substantially extends over the entire width (perpendicular to the conveying direction DC) of the conveyor 11 arranged below the coating opening 23. The upper coating material container 21 or upper bunker 21 respectively comprises the coating opening 23. The upper coating material container 21 is attached to the base frame 3. For adjusting the amount of granular coating material that is poured from the upper bunker 21 through the coating opening 23, the coating unit 19 further comprises an adjustment mechanism 25. Preferably, the adjustment mechanism comprises an adjustment gate 27 positioned at the upper material container 21 in proximity to the coating opening 23. The adjustment gate 27 is movable, in particular slidable. The adjustment gate 27 can be moved to adjust an overlap of the coating opening 23. Through this a size of a slot, from which granular coating material can fall from the upper bunker 21, can be adjusted. The adjustment gate 27 can comprise any type of suitable adjustment mechanism, such as a hand lever or an adjustment drive. For example and preferably, the adjustment gate 27 can be driven via an electric and/or pneumatic motor. In the embodiment of Fig. 2, the adjustment gate 27 is adjustable via a hand lever. The hand lever can be fixed in a desired position via a clamping mechanism, in particular a clamping screw.

The coating opening 23 is positioned vertically above a horizontal segment 29 of the inlet conveyor 13. An inclined segment 31 of the inlet conveyor 13 connects the product inlet 7 and the horizontal segment 29. In the embodiment shown in Fig. 1 and Fig. 2, the coating opening 23 is a rectangular slot that extends over the entire width of the respective segment of the conveyor 11 it is positioned above. The coating unit 19 is configured to provide a curtain of granular coating material, that extends from the coating opening 23 to the surface of the conveyor 11 positioned below. The conveyor 11 conveys food products from the product inlet 7 and through this curtain of coating material. Some of the granular coating material sticks to the surface of the food product and forms a coating.

Preferably, the conveyor unit 5 is configured such that excess coating material or coating material that does not stick to the surface of a food product respectively, can fall through the conveyor unit 5, in particular through the conveyor 11 and/or past the conveyor 11 to a bed 33 positioned below the conveyor unit 5 in the vertical direction DV. Preferably, the bed 33 forms part of the base frame 3. Preferably, the conveyor 11 is configured to let at least some coating material pass through. For example, the conveyor 11 can be a chain conveyor. The conveyor 11 can also be configured to form a layer of coating material on a conveyor surface. This can help to coat a lower surface of food products.

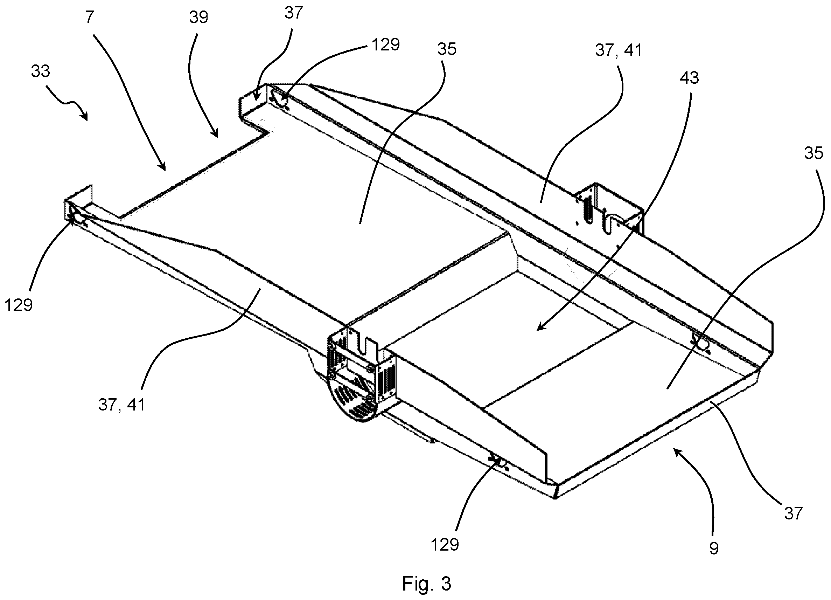

Fig. 3 shows the bed 33 in detail. In the present embodiment, the bed 33 extends substantially along the entire dry coating module 1 in the conveying direction DC. For illustrative purposes the product inlet 7 and the product outlet 9 are shown in Fig. 3. The bed 33 comprises a bottom 35 and four side walls 37. The sidewalls 37 extend substantially perpendicular from the bottom 35 in the vertical direction DV. The side wall 37 at the product inlet 7 comprises a recess 39. The inlet conveyor 13 extends into this recess 39. Below the recess 39, a tray or gutter may be provided for catching coating material. In other embodiments, no recess 39 is provided in the side wall 37 at the product inlet 7. The side walls 37 and the bottom 35 form a tray. Excess coating material can accumulate on the tray. Lateral side walls 41 of the bed 33 extend further up in the vertical direction than the side walls 37 at the product inlet 7 and product outlet 9.

The bed 33 comprises a bed discharge opening 43. Excess coating material can fall from the bed discharge opening 43. Here the bed discharge opening 43 is provided in the bottom 35 of the bed 33. Alternatively or additionally, one or more discharge openings 43 may be provided in at least one of the side walls 37. Above the discharge opening 43, the bed 33 forms a chute that slopes towards the discharge opening 43. An adjustment mechanism can be provided for adjusting the size of the discharge opening 43. For example, a slidable plate may be provided that can be slid into an overlap with the discharge opening 43 to adjust its size.

As shown in Fig. 1, a free space is provided beneath the bed 33, in particular below the discharge opening 43. This allows positioning of lower coating material container below the discharge opening 43. Excess coating material accumulated on the bed 33 can thus fall through the discharge opening 43 and into the lower coating material container positioned below. For illustrative purposes, the lower coating material container or lower bunker respectively is not shown in the figures. Preferably, the lower bunker is removable. This can facilitate cleaning as the bed 33 is then accessible from below via the discharge opening 43. Moreover, it is possible to rinse the bed 33 with water and to collect the water in a suitable container positioned below the discharge opening 43 instead of the lower bunker.

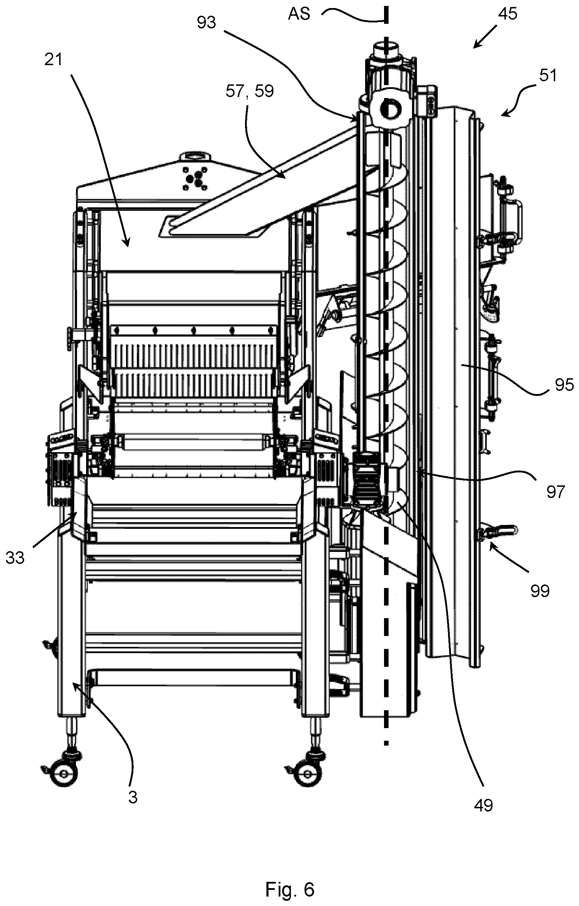

The lower bunker can be connected to a coating material supply unit 45. The coating material supply unit 45 is configured to provide granular coating material to the upper coating material container 21 of the coating unit 19. As shown in the figures, the coating material supply unit 45 preferably comprises a screw conveyor 47 (see Fig. 6). The screw conveyor 47 is configured for moving granular coating material in the vertical direction DV. The screw conveyor 47 comprises a conveyor screw 49 that extends along a screw axis AS through a conveyor housing 51. For driving a rotation of the conveyor screw 49, the screw conveyor 47 comprises a drive motor, which is preferably positioned on top of the conveyor housing 51 (see Fig. 1) or below the conveyor housing 51 in the vertical direction. The housing 51 comprises a conveyor inlet opening 53 and a conveyor outlet opening 55. Granular coating material can enter into the conveyor housing 51 to be conveyed in the vertical direction DV by the conveyor screw 49 through the conveyor inlet opening 53. At the conveyor outlet opening 55, the granular coating material is discharged onto an outlet guide 57. The outlet guide 57 guides the granular coating material away from the conveyor housing 51 or its conveyor outlet opening 55 respectively. Preferably, the outlet guide 57 is a slide 59. The slide 59 is inclined such that granular coating material slides from the conveyor outlet opening 55 to a fill opening 61 of the upper coating material container 21 of the coating unit 19.

The portion of the conveyor housing 51 comprising the conveyor inlet opening 53 can extend into the lower coating material container. In other preferred configurations, the lower coating material container or lower bunker respectively can be directly or indirectly attached to the conveyor inlet opening 53 of the coating material supply unit. For example, a lateral conveyor can be provided for moving granular coating material from the lower bunker to the conveyor inlet opening 53. In some embodiments, an alternative type of conveyor can be provided instead of the screw conveyor 49. For example, a vacuum conveyor and/or pump can be provided that sucks the granular coating material from the lower bunker and moves it towards the upper bunker 21.

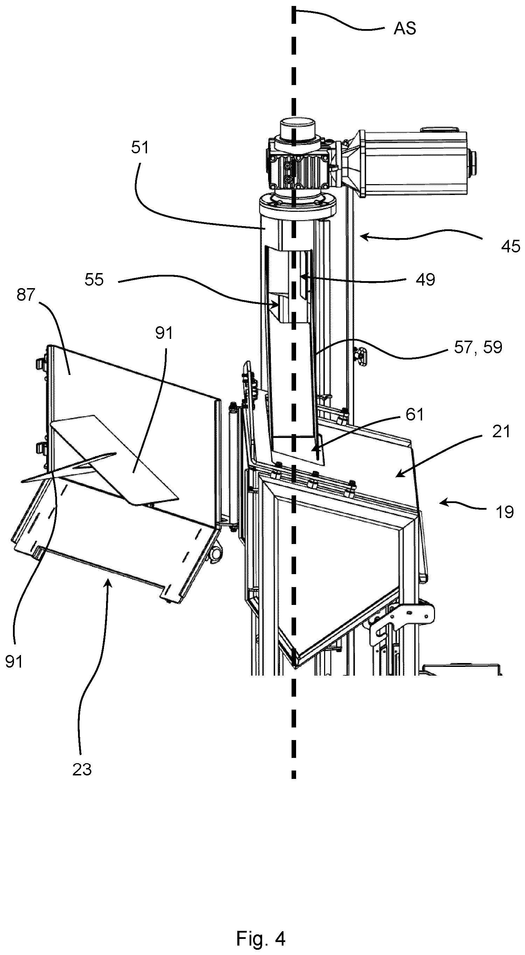

Fig. 4 shows a lateral view on the coating unit 19 and the coating material supply unit 45. In particular, the coating unit 19 and the coating material supply unit 45 are shown in an open state for cleaning. The coating unit 19, in particular the upper coating material container 21, and/or the conveyor housing 51 can preferably be opened to facilitate cleaning an interior of the respective component. As shown in the lateral view of Fig. 4 or in a view along a lateral direction of the dry coating module 1 that is perpendicular to the conveying direction DC and the vertical direction DV respectively, the conveyor outlet opening 55 is provided asymmetrically with respect to the screw axis AS of the conveyor screw 49. Preferably, the conveyor outlet opening 55 is provided asymmetrically in the conveyor housing 51 when viewed in the lateral direction. Preferably, the outlet opening 55 intersects a side wall of the conveyor housing 51 that extends parallel to the lateral direction.

The preferred position of the conveyor outlet opening 55 and/or the outlet guide 57 shown in the figures, facilitates cleaning of the coating material supply unit, in particular of the conveyor screw 49 and an interior of the conveyor housing 51. The asymmetrically placed conveyor outlet opening 55 facilitates cleaning of the conveyor screw 49 over its entire diameter. For example, the conveyor screw 49 can be rotated during cleaning. Moreover, the outlet opening 55 intersecting a side wall of the conveyor housing 51 facilitates cleaning of the inner surfaces of the conveyor housing 51 as a view of the interior of the conveyor housing 51 is not obstructed (or less obstructed) by walls of the conveyor housing 51 extending at an angle to the lateral direction. In the present embodiment and preferably, the slide 59 extends parallel to the lateral direction or perpendicular to the conveying direction DC respectively.

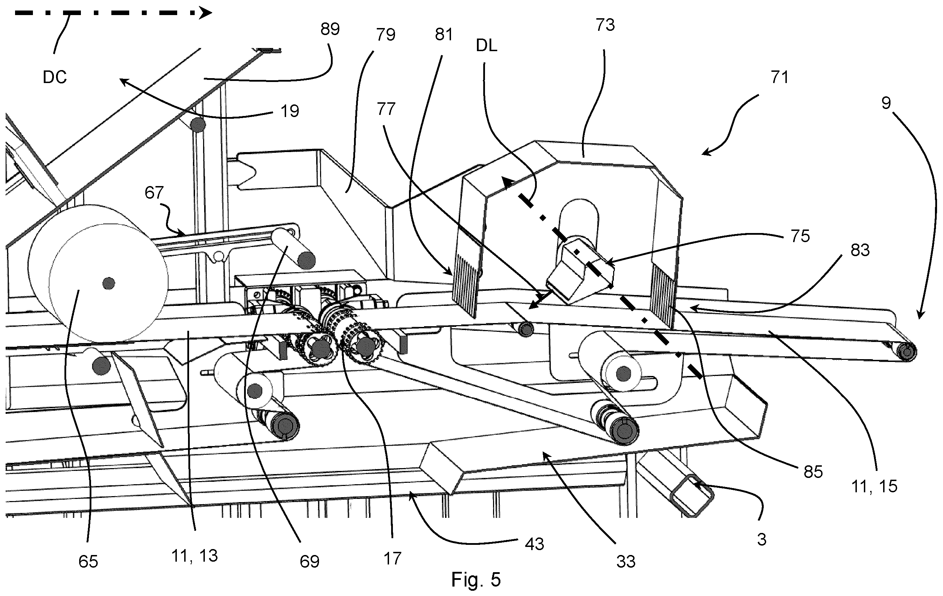

As described above, food products positioned on the conveyor 11 of the conveyor unit 5, in particular food products positioned on the inlet conveyor 13, can be coated from above with the coating unit 19 and from below by granular coating material that is transported along by the inlet conveyor 13 from the bed 33. A pressing device 63 of the dry coating module 1 is provided downstream of the coating unit 19 or the curtain of granular coating material provided by the coating unit 19 in the conveying direction DC. The pressing device 63 is configured to press against the food products from above in order to press the coating material to the food products. As shown in Figs. 1 and Fig. 5, the pressing device 63 comprises a pressing roller 65. Preferably, the pressing roller 65 can be biased towards a surface of the conveyor 11 it is positioned above. For example, a spring element or the like may be provided for biasing the pressing roller 65 towards a conveyor surface of the conveyor 11 carrying the food product. Even though shown above the inlet convey 13, the pressing device 63 could also be arranged above another conveyor 11 of the conveyor unit 5.

In the present embodiment and preferably, the pressing roller 65 is instead provided on a rocker 67. The rocker 67 is attached to the base frame 3 at a rocker support portion. The rocker support portion allows rotation or a rocking motion respectively of the rocker. An attachment position of the rocker 67 on the base frame 3 can be adjustable, in particular in the vertical direction DV.

The pressing roller 65 is attached to a first rocker arm of the rocker. The pressing roller 65 has a substantial weight, preferably a weight of 500 g or more, preferably 750 g or more, preferably 1000 g or more, preferably 1250 g or more, preferably 1500 g or more, preferably 1750 g or more, preferably 2000 g or more, preferably 2250 g or more, preferably 2500 g or more, preferably 2750 g or more, preferably 3000 g or more, preferably 3250 g or more, preferably 3500 g or more, preferably 3750 g or more, preferably 4000 g or more, preferably 4250 g or more, preferably 4500 g or more, preferably 4750 g or more, preferably 5000 g or more, preferably 6000 g or more, preferably 7000 g or more, preferably 8000 g or more, preferably 9000 g or more, preferably 10 kg or more, preferably 11 kg or more, preferably 12 kg or more, preferably 13 kg or more, preferably 14 kg or more, preferably 15 kg or more, preferably 16 kg or more, preferably 17 kg or more, preferably 18 kg or more, preferably 19 kg or more, preferably 20 kg or more, preferably 21 kg or more, preferably 22 kg or more, preferably 23 kg or more, preferably 24 kg or more, preferably 25 kg or more.

The gravitational force pulls the pressing roller 65 towards the conveyor 11 or the surface of the conveyor 11 oriented towards the pressing roller 65 respectively. The rotatably supported rocker 67 allows a movement of the pressing roller 65 towards and away from the conveyor 11. The pressing device 63 further comprises a counter-weight 69 provided on an opposite arm of the rocker 67. The gravitational force of the counter-weight 69 acts against the gravitational force of the pressing roller 65. A torque about a rotational axis of the rocker 67 induced by the pressing roller 65 acts against a torque induced by the counter-weight 69. Preferably, the counter-weight 69 is movable along the rocker arm of the rocker 67 it is attached to. This allows adjustment of a lever arm length of a lever arm on which the counter-weight 69 acts and thus also of the torque induced by the counter-weight 69. A pressing force of the pressing roller 65 on food products positioned on top of the conveyor 11 thus adjustable by changing the longitudinal position of the counter-weight 69 on the rocker 67.

The pressing roller 65 can be made of or comprise a soft material, such as a foam, rubber or the like. In particular a pressing surface of the pressing roller 65 that is configured to contact the coated food products can be a soft surface.

As shown in Figs. 1 and Fig. 5, the transition section 17 is provided downstream of the pressing device 63 with respect to the conveying direction DC. At the transition section 17, food products are transferred from the inlet conveyor 13 to the outlet conveyor 15. A bridge element, in particular a substantially wedge shaped bridge element can be provided between the inlet conveyor 13 and the outlet conveyor 15 that bridges a gap between the two conveyors 13, 15 and prevents food products from falling onto the bed 33.

The dry coating module 1 further comprises an air knife unit 71. The air knife unit 71 is configured to direct an air jet onto food products conveyed in the conveying direction DC by the conveyor unit 5. The air jet can blow of excess coating material from the respective food product. The air knife unit 71 is preferably provided downstream of the coating unit 19 in the conveying direction DC. Here, the air knife unit 71 is positioned above the conveyor 11, in particular the outlet conveyor 15, in the vertical direction DV. Preferably, the air knife unit 71 is provided downstream of the transition section 17.

The air knife unit 71 comprises an air knife housing 73. An interior of the air knife housing 73 defines a treatment space. Fig. 6 shows a perspective cut view of a portion of the dry coating module 1 comprising the air knife unit 71. In this cut view, the treatment space by defined by the air knife housing 73 as well as jet nozzle 75 of the air knife unit 71 are visible. Providing the jet nozzle 75 in an enclosed treatment space prevents that excess granular coating material is blown to other portions of the dry coating module 1 and/or away from the dry coating module 1. A flow direction of an air jet ejected from the jet nozzle 75 is illustrated by arrow 77. Preferably, the jet nozzle 75 is adjustable. In particular, an orientation of a nozzle opening of the jet nozzle 75 with regard to the conveyor 11 can be adjustable. Here, the jet nozzle 75 is configured to be rotated about a rotational axis that extends substantially perpendicular to the conveying direction DC and the vertical direction DV or in the lateral direction DL respectively. This allows adjustment of an angle at which an air jet provided by the jet nozzle 75 hits food products transported by the conveyor 11 in the conveying direction. Preferably, the jet nozzle 75 is a slit nozzle. The nozzle 75 can extend substantially entirely over the conveyor 11 in the lateral direction DL.

The jet nozzle 75 can comprise a pneumatic connector. Pressurized air can be provided to the jet nozzle 75 via the pneumatic connector. In some embodiments, the dry coating module 1 can comprise a compressor for providing pressurized air.

The air knife housing 73 is supported on the base frame 3. As shown in Fig. 5, the air knife housing 73 is preferably pivotably supported on the base frame 3. The air knife housing 73, which is here attached to the base frame 3 via an arm 79, can be pivoted away from the bed 33. In Fig. 5 the air knife housing 73 can be pivoted away from the bed 33 in the counter-clockwise direction. This can facilitate cleaning of the treatment space defined by the air knife housing 73 and/or the jet nozzle 75. Suitable fixing means can be provided for fixing the air knife housing 73 in a desired pivot position. For example, clamping means can be provided for clamping the arm 79 against the base frame 3. The jet nozzle 75 can be height adjustable in the vertical direction VD.

The air knife housing 73 comprises an inlet opening 81 and an outlet opening 83. Coated food products that are moved in the conveying direction DC by the conveyor unit 5 can enter the treatment space via the inlet opening 81 of the air knife housing 73 and leave the treatment space through the outlet opening 83. AS shown in Fig. 5, the inlet opening 81 and/or the outlet opening 83 can be covered by a flexible screen 85. Here a slatted curtain having multiple slats made from a plastic material is provided as a screen 85 for covering the inlet opening 81 and the outlet opening 83 of the air knife housing 73. The flexible screens 85 help to contain granular coating material in the treatment space defined by the air knife housing 73. This can reduce the effort required for cleaning the dry coating module 1.

The embodiment of the dry coating apparatus 1 shown in the figures is optimized to facilitate cleaning. For example and as shown in Fig. 4, the upper coating material container 21 comprises a door 87. The door 87 can be opened to facilitate cleaning of an interior or storage space respectively of the upper coating material container 21. A container bottom 89 of the upper bunker 21 can be removable. This can also facilitate thorough cleaning of the storage space of the upper bunker 21. The container bottom 89 can be angled towards the coating opening 23 such that granular coating material stored in the upper bunker 21 slides towards the coating opening 23.

The fill opening 61 for filling granular coating material into the upper coating material container 21 is provided above the bunker bottom 89. In the preferred embodiment shown in the figures, the dry coating module 1 only comprises a single coating material supply unit 45 that is arranged at one lateral side of the dry coating module 1. Granular coating material is therefore provided to the fill opening 61 from one lateral side only. To evenly distribute the granular coating material over the entire width of the upper coating material container 21, the upper material container 21 comprises two distribution plates 91. The distribution plates 91 are positioned below the fill opening 61 in the vertical direction DV angled with respect to the lateral direction DL. The distribution plates 91 help to provide an even curtain of granular coating material. In other embodiments, the upper coating material container 21 can comprise only one or more than two distribution plates 91. Preferably, at least two of the distribution plates 91 intersect each other as shown in Fig. 4.

Fig. 4 further shows that the distribution plates 91 are attached to the door 87. When the door 87 is opened, the distribution plates 91 move alongside the door 87. In the open configuration shown in Fig. 4, the distribution plates 91 are easily accessible for cleaning. Moreover, the large door 87 facilitates cleaning of the storage space defined by the upper coating material container 21.

Fig. 6 shows a rear view of the dry coating module 1 along the conveying direction DC. In particular, the dry coating module 1 is shown in a cleaning state. For cleaning coating material supply unit 45, the conveyor housing 51 can be opened such that the interior of the conveyor housing 51 and the conveyor screw 49 are accessible. Preferably, accessible over substantially their entire length along the screw axis AS.

The conveyor housing 51 comprises at least a first housing shell 93 and a second housing shell 95. The first housing shell 93 and the second housing shell 95 of the conveyor housing 51 are connected to each other via a hinge 97. Preferably, a hinge axis of the hinge 97 extends parallel to the screw axis AS of the conveyor screw 49. For opening the conveyor housing 51, the second housing shell 95 can be swung away from the first housing shell 93 like a door. This opens up the interior of the conveyor housing 51 and facilitates cleaning of all components of the coating material supply unit 45 arranged in the conveyor housing 51. One or more locking devices can be provided for securing the first housing shell 93 and the second housing shell 95 together. Here, the coating material supply unit 45 comprises a latch 99 for fixing the second housing shell 95 to the second housing shell 93.

Fig. 1, Fig. 3 and Fig. 5 show the dry coating module 1 in an operating state. The conveyors 11 are in an operating position 101. In the operating position 101, the inlet conveyor 15 can receive food products at the product inlet 7 and the outlet conveyor 15 can discharge coated food products at the product outlet 9.

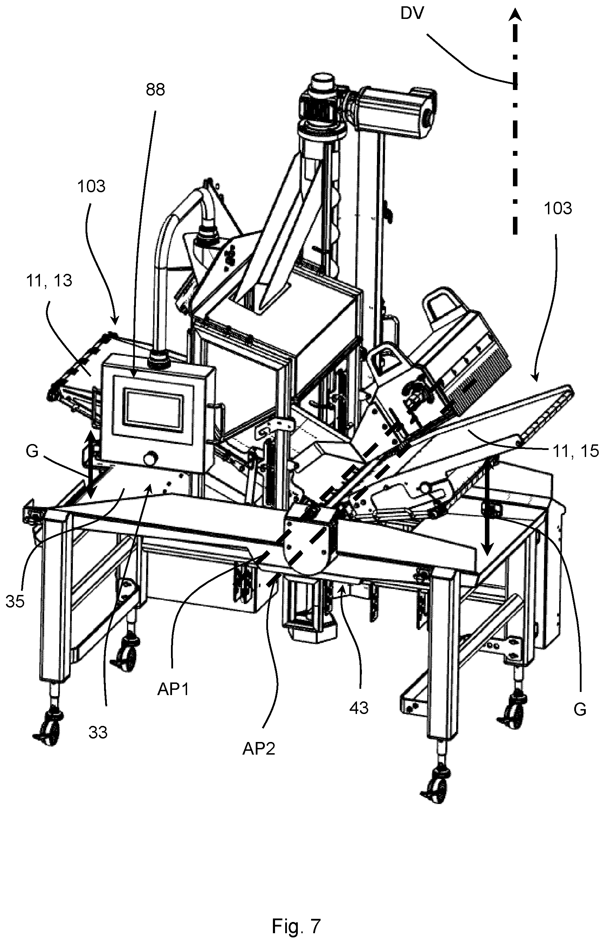

Fig. 7 shows the dry coating module 1 in the cleaning state. In the cleaning state, the door 87 of the upper coating material container 21 is opened, the second housing shell 95 is pivoted away from the first housing shell 93 to allow access to the interior of the conveyor housing 51, the air knife unit 71 is pivoted away from the bed 33 and/or the container bottom 89 of the upper coating material container 21 is removed.

To further facilitate cleaning, at least one segment of a conveyor 11 of the dry coating module 1 is movable from its operating position 101 to a cleaning position 103. In Fig. 7 both the inlet conveyor 13 and the outlet conveyor 15 are in a cleaning position 103. Here, the movement of the conveyors 11 to the cleaning position 103 is a pivoting motion about a respective pivot axis AP1, AP2 of the conveyors 11. It shall be understood that in some embodiments only one conveyor 11 of the dry coating module 1 can be movable to a cleaning position 103, only a segment of a conveyor 11 can be movable to a cleaning position 103 (for example by pivoting only one guide roller away from the bed), or none of the conveyors 11 of the conveyor unit 5 can be movable to a cleaning position 103.

As shown in Fig. 7, a vertical gap G measured in the vertical direction DV between the conveyors 11 and the section of the bed 33, in particular of the bottom 35 of the bed 33, positioned vertically below the conveyors 11 is increased compared to the operating position 101. The bed 33 and an underside and/or lower run of the conveyors 11 is easily accessible for cleaning. For example, pivoting the inlet conveyor 15 away from the bed in the clockwise direction, allows removal of granular coating material accumulated on the bottom 35 of bed 33 by hand, with a suitable tool or with a water jet. Due to the then relatively small gap between the underside of the inlet conveyor 13 and the bottom 35 of bed 33, this is substantially more difficult when the inlet conveyor 13 is in its operating position 101. In alternative embodiments, instead of a pivoting motion, the conveyors 11 or segments thereof can also be moved laterally, in the conveying direction DC and/or vertically in the vertical direction DV.

The pivot axis AP1 of the inlet conveyor 13 and the pivot axis AP2 of the outlet conveyor 15 both extend in the lateral direction DL or substantially transverse to the conveying direction DC and the vertical direction DV respectively. Preferably, the pivot axis AP1 of the inlet conveyor 13 and the pivot axis AP2 of the outlet conveyor 15 are parallel. Here, both pivot axis AP1, AP2 are arranged above the bed discharge opening 43 of the bed 33.

Fig. 7 further shows a control device 88 of the dry coating module 1 which has been omitted in the other figures.

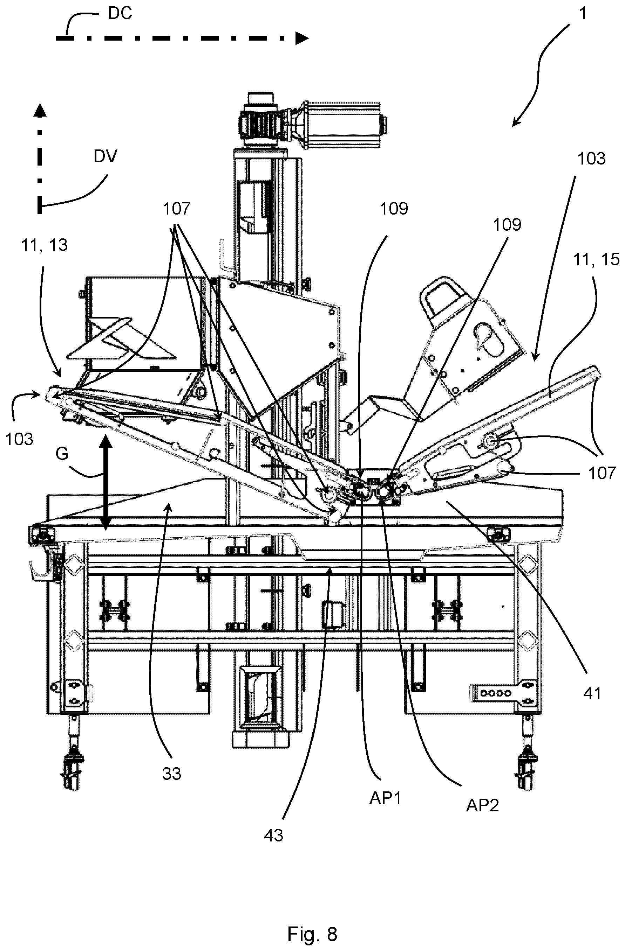

Fig. 8 shows a lateral cut view of the dry coating module 1. This cut view shows that the conveyors 11 are each supported by a respective conveyor support frame 105. The conveyor support frames 105 rotatably support guide rollers 107 of the conveyors 11. The guide rollers 107 guide the chain, belt, slats or the like of the respective conveyor 11. The conveyor support frames 105 are rotatably supported on the base frame 3, in particular on both of the lateral side walls 39 of the bed 33.

The conveyor support frames 105 are rotatable about their respective pivot axis AP1, AP2. The pivot axis AP of each support frame 105 extends through support portions of the respective conveyor support frame 105. The dry coating module 1 can comprise one or more gas pressure dampers to assist the pivoting motion of the conveyor support frames 105 and the conveyors 11 supported thereon and/or to hold the conveyor support frames 105 in the respective cleaning position 103.

Both pivot axes AP1, AP2 are provided above the bed discharge opening 43 such that the portions or segments of the conveyors 11 that do not move by a large amount when the conveyor support frames 105 are pivoted about the respective pivot axis AP1, AP2, are easily accessible from below for cleaning. Moreover, a space below the pivot axes AP1, AP2 is relatively big such that less coating material tends to accumulate in this area.

In Fig. 8, the pivot axes AP1, AP2 extend perpendicular to the picture plain. Preferably, the pivot axis AP extends through a drive roller 109 of the guide rollers 107 of the respective conveyor 11. The drive roller 109 is driven and in turn drives the respective belt, chain, slatted belt or the like supported thereon. By providing pivot axes AP that extend through the drive roller 109 of the respective conveyor 11, a simple drive arrangement of the dry coating module is possible.

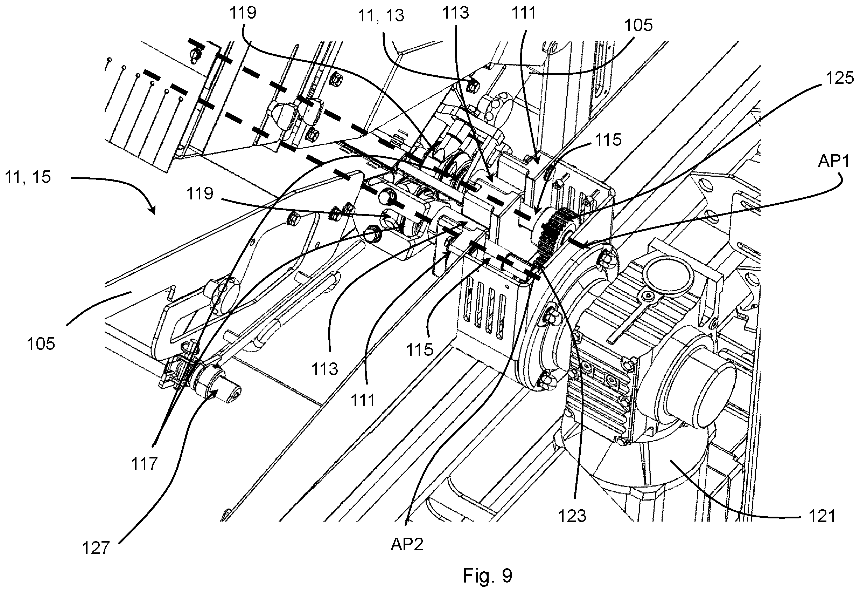

Fig. 9 shows a detail view of the drive arrangement and the support of the conveyor support frames 105 on the base frame 3. As shown, the base frame 3 preferably comprises brackets 111. In particular, brackets 111 are attached to both lateral side walls 41 of the bed 33. The brackets 111 each define a u-shaped contour, in which a corresponding support portion 113 of the respective conveyor support frame 105 is rotatably received. A bearing or bushing may be provided in between the support potion 113 and the bracket 111 in some embodiments. On an opposite lateral side the support of the support frames 105 on the base frame 3 may be similar.

As described above, the pivot axis AP of the respective conveyor 11 may extend through a drive roller 109 of the respective conveyor 11. Such an arrangement is shown in Fig. 9. In particular, a drive shaft 115 for driving the respective drive roller 109 extends through the support portion 113 of the respective conveyor support frame 105. A bearing 117 may be provided at a roller support 119. The drive shaft 115 is rotatable independently from the respective conveyor support frame 105. The conveyor 11 can is drivable in its operating position 101 as well as in its cleaning position 103. This can facilitate cleaning of the conveyor 11.

Although a pivotable conveyor support frame 105 has been described for both conveyors 11 of the conveyor unit 5, it shall be understood that such an arrangement is also preferred for only one of the conveyors 11.

In the preferred configuration shown in Fig. 9, the drive shaft 115 of the inlet conveyor 13 as well as the drive shaft 115 of the outlet conveyor 15 are drivable with a single conveyor drive motor 121. The conveyor drive motor 121 is here formed by an electric motor. An output shaft of the conveyor drive motor 121 is attached to a drive gear 123. The drive gear 123 engages a respective drive pinion 125 of each drive shaft 115 (only the drive pinion 125 of the drive shaft 115 of the inlet conveyor 13 is shown in Fig. 9). This allows a defined speed ratio of the inlet conveyor 13 and the outlet conveyor 15.

Fig. 9 further shows a locking pin 127. The locking pin 127 can engage a locking orifice 129 provided on the frame 3 for holding the conveyor 11 in its operating position 101. In the preferred embodiment, at total of four locking orifices 129 and locking pins 127 are provided. The locking orifices 129 are formed in the lateral side walls 41 of the bed 33.

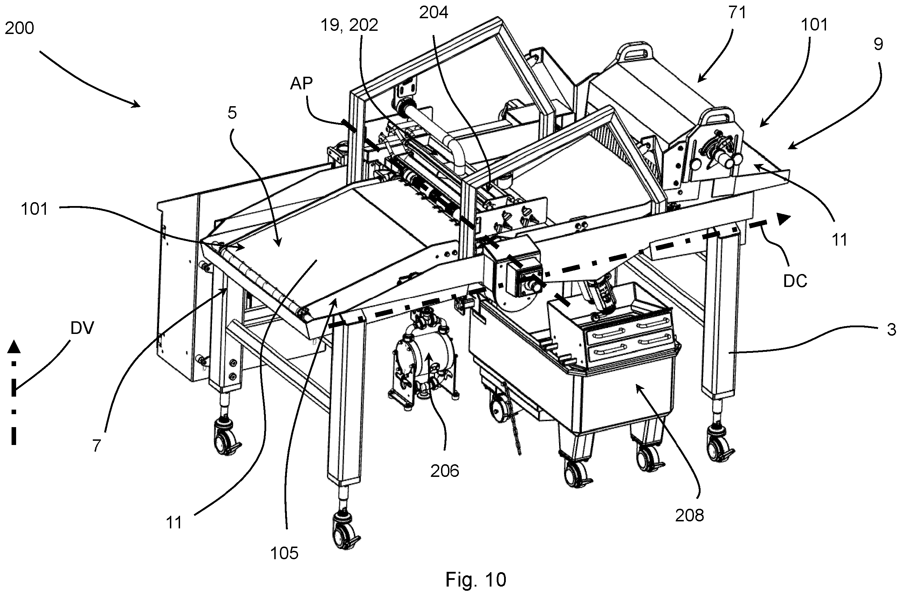

Fig. 10 illustrates a wet coating module 200. The reference signs used in the above description of the dry coating module 1 are also used for similar components of the wet coating module 200. For example, the wet coating module 203 also comprises a base frame 3, a conveyor unit 5 and a coating unit 19. However, the coating unit 19 of the wet coating module 1 is a liquid coating unit 202 that is configured to form a curtain of liquid coating material. Here, the liquid coating unit 202 comprises an upper batter tank 204 that can be filled with liquid coating material by a liquid coating material supply unit 206. For example, the liquid coating material supply unit 206 can comprise a pump that sucks liquid coating material from a removable lower liquid container 208 and pumps the liquid coating material, such as a batter, up into the upper batter tank 204 provided above a conveyor 11 of the conveyor unit 5 of the wet coating module 200. The liquid coating material can overflow the upper batter tank 204 to form the curtain of liquid coating material that extends from the upper batter tank 204 to a surface of the conveyor 11 oriented towards the liquid coating unit 202.

The conveyor unit 5 of the wet coating module 200 also comprises at least one conveyor segment that can be moved, in particular pivoted, away from a bed 3 of the wet coating module 200 to increase a vertical gap G between at least a portion of the conveyor 11 or conveyor segment and the bed 33. Here, the wet coating module 200 also comprises two conveyors 11, each pivotable about a pivot axis AP (only one shown in Fig. 10) to a cleaning position 103 from an operating position 101 shown in Fig. 10.

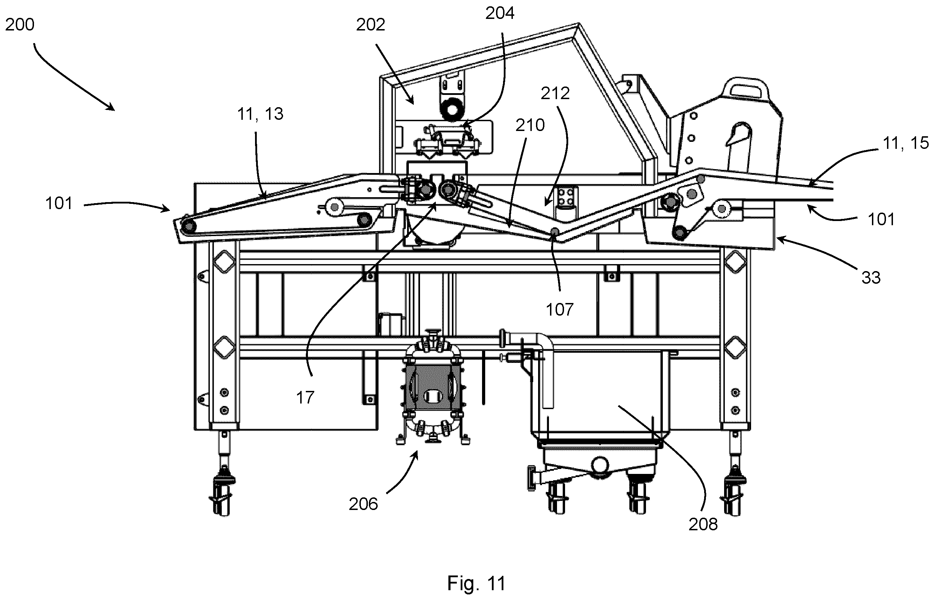

Fig. 11 shows a lateral cut view (view along the lateral direction DL) of the wet coating module. As shown in Fig. 11, the liquid coating unit 202 is arranged above a transition section 17 between the inlet conveyor 13 and the outlet conveyor 15 of the wet coating module 200. In other embodiments, the liquid coating unit 202 could be arranged only above the inlet conveyor 13 or only above the outlet conveyor 15.

The bed 33 of the wet coating module 200 has a different shape than the bed 33 of the dry coating module. The bed 33 defines two basins 210 for forming a pool of liquid coating material. The outlet conveyor 15 has a bend 212 that extends into the basin 210 arranged below. Food products conveyed by the outlet conveyor 15 or any other conveyor extending through a basin 210, can be dipped into a pool of liquid coating material formed in the basin. Preferably, the wet coating module 200 comprises adjustment means configured to adjust a surface level of wet coating material accumulated in at least one of the basins 210. For example, an adjustable valve can be provided at an outlet of the bed 33. By closing the valve or by reducing an amount of liquid coating material that can flow through the valve, in particular into the lower liquid container, the surface level can be adjustable. Adjustment is also possible by varying an amount of liquid coating material provided to the liquid coating unit 202 by the liquid coating material supply unit 206. A control device of the wet coating module 200 can be configured to control the valve and/or the liquid coating material supply unit in order to adjust the surface level of liquid coating material accumulated in the basin 210. The bend 212 can be formed by one or more guide rollers 107 of the conveyor 11.

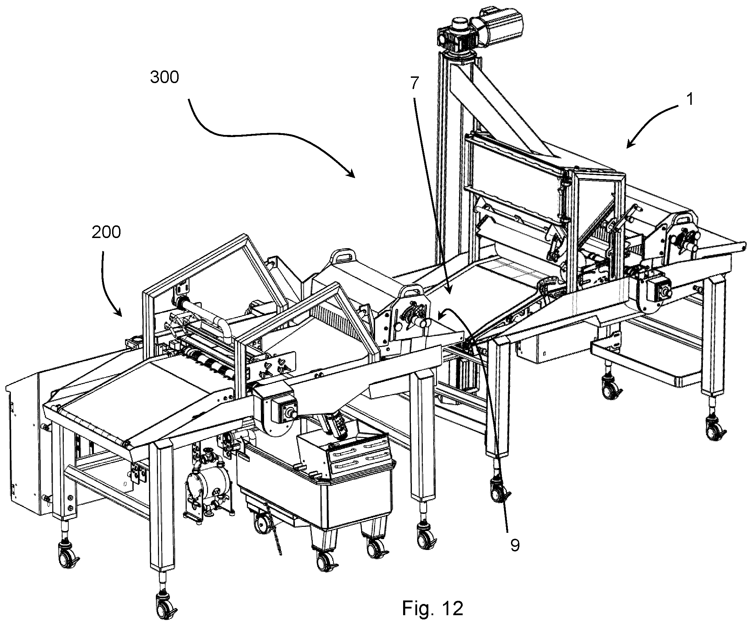

Fig. 12 shows a coating system 300. The coating system comprises the dry coating module 1 and the wet coating module 200 arranged adjacent each other in the conveying direction DC. The dry coating module 1 is arranged downstream of the wet coating module 200 such that food products having a (semi-)liquid coating can be received at the product inlet 7 of the dry coating module 1 from the product outlet 9 of the wet coating module 200.

### List of reference signs

- 1: dry coating module
- 3: base frame
- 5: conveyor unit
- 7: product inlet
- 9: product outlet
- 11: conveyor(s)
- 13: inlet conveyor
- 15: outlet conveyor
- 17: transition section
- 19: coating unit
- 21: upper coating material container; upper bunker
- 23: coating opening
- 25: adjustment mechanism
- 27: adjustment gate
- 29: horizontal segment of inlet conveyor
- 31: inclined segment of inlet conveyor
- 33: bed
- 35: bottom
- 37: side wall
- 39: recess
- 41: lateral side wall
- 43: bed discharge opening
- 45: coating material supply unit
- 47: screw conveyor
- 49: conveyor screw
- 51: conveyor housing
- 53: conveyor inlet opening
- 55: conveyor outlet opening
- 57: outlet guide
- 59: slide
- 61: fill opening
- 63: pressing device
- 65: pressing roller
- 67: rocker
- 69: counter-weight
- 71: air knife unit
- 73: air knife housing
- 75: jet nozzle
- 77: arrow representing an air jet
- 79: arm
- 81: inlet opening
- 83: outlet opening
- 85: flexible screen
- 87: door
- 88: control device
- 89: container bottom of upper coating material container
- 91: distribution plate(s)
- 93: first housing shell
- 95: second housing shell
- 97: hinge
- 99: latch
- 101: operating position
- 103: cleaning position
- 105: conveyor support frame
- 107: guide roller(s)
- 109: drive roller(s)
- 111: bracket(S)
- 113: support portion
- 115: drive shaft
- 117: bearing
- 119: roller support
- 121: conveyor drive motor
- 200: wet coating module
- 202: liquid coating unit
- 204: upper batter tank
- 206: liquid coating material supply unit
- 208: lower liquid container
- 210: basin
- 212: bend
- AP1, AP2: pivot axis
- AS: screw axis
- DC: conveying direction
- DL: lateral direction
- DV: vertical direction
- G: gap

## Claims

1. A dry coating module (1) for coating food products with a granular coating material, the dry coating module comprising:
a base frame (3),
a conveyor unit (5) for conveying a food product in a conveying direction (DC) from a product inlet (7) to a product outlet (9), wherein the conveying direction (DC) is oriented at least approximately horizontally, and wherein the conveyor unit (5) comprising at least one conveyor (11),
a coating unit (19) for pouring granular coating material onto the conveyor (11) and a food product positioned on the conveyor (11), wherein the coating unit (19) is arranged above the conveyor (11) in a vertical direction (VD), and
a bed (33) for collecting excess coating material, wherein the bed (33) extends at least along a section of the conveyor (11) in the conveying direction (DC), and wherein the bed (33) is arranged below the conveyor (11) in the vertical direction (VD), and
wherein at least a conveyor segment of the conveyor (11) is reversibly movable from an operating position (101) to a cleaning position (103), wherein a vertical gap (G) between at least a portion of the conveyor (11) and the bed (33) is increased when the conveyor (11) is moved from the operating position (101) to the cleaning position (103).

2. The dry coating module (1) of claim 1, wherein the bed (33) comprises a bed discharge opening (43) for discharging excess coating material to a lower coating material container, wherein preferably the lower coating material container is a removable container.

3. The dry coating module (1) of any of the preceding claims, wherein the conveyor segment of the conveyor (11) is pivotable around a pivot axis (AP1, AP2) from the operating position (101) to the cleaning position (103), wherein the pivot axis (AP1, AP2) preferably extends transverse to the conveying direction (DC) and/or the vertical direction (DV).

4. The dry coating module (1) of claims 2 and 3, wherein the pivot axis (AP1, AP2) is arranged above the bed discharge opening (43) in the vertical direction (DV).

5. The dry coating module (1) of any of the preceding claims, further comprising a gas pressure damper for assisting a movement of the conveyor segment of the conveyor (11) from the operating position (101) to the cleaning position (103) and/or for holding the conveyor (101) in the cleaning position (103).

6. The dry coating module (1) of any of the preceding claims, wherein the conveyor unit (5) comprises an inlet conveyor (13) configured to receive food products to be coated at the product inlet (7) and to convey the products in the conveying direction (DC) to a transition section (17), and an outlet conveyor (15) configured to convey products received at the transition section (17) in the conveying direction (DC) and to discharge coated food products at the product outlet (9), wherein at least one of the inlet conveyor (13) and the outlet conveyor (15) forms or comprises the movable conveyor segment.

7. The dry coating module (1) of claim 6, further comprising a drive unit for driving at least a conveyor section of the inlet conveyor (13) and a conveyor section of the outlet conveyor (15).

8. The dry coating module (1) of any of the preceding claims, further comprising a coating material supply unit (45) for providing coating material to the coating unit (19), wherein the coating material supply unit (45) comprises a screw conveyor (47) comprising at least one rotatable conveyor screw (49) for conveying the granular coating material and a conveyor housing (51), wherein the conveyor screw (49) extends along a screw axis (AS) and is at least partially received in the conveyor housing (51).

9. The dry coating module (1) of claim 8, wherein the conveyor housing (51) comprises a first housing shell (93) and a second housing shell (95) connected by a hinge (97), wherein a hinge axis of the hinge (97) preferably extends substantially parallel to the screw axis (AS) of the conveyor screw (49).

10. The dry coating module (1) of claim 8 or 9, wherein the conveyor housing (51) comprises a conveyor outlet opening (55) for discharging granular coating material, wherein the conveyor outlet opening (55) is arranged asymmetrically with respect to the screw axis (AS) of the conveyor screw (49).

11. The dry coating module (1) of any of the preceding claims, wherein the coating unit (19) comprises an upper coating material container (21) defining a storage space for granular coating material, the upper coating material container (21) comprising a door (87) for accessing the storage space, wherein the coating unit (19) further comprises at least one distribution plate (91) arranged below a fill opening (61) for filling the upper coating material container (21) with granular coating material, and wherein the at least one distribution plate (91) is attached to the door (87).

12. The dry coating module (1) of any of the preceding claims, further comprising an air knife unit (71) for removing loose or excess coating material from a coated food product, wherein the air knife unit (71) is provided downstream of the coating unit (19) in the conveying direction (DC) and includes at least one jet nozzle (75) for providing an air jet (77) onto a surface of the coated food product.

13. The dry coating module (1) of any of the preceding claims, further comprising adjustment means configured to adjust the operating position of the conveyor segment of the at least one conveyor (11).

14. A wet coating module (200) for coating food products with a liquid coating material, the wet coating module (200) comprising
a base frame (3),
a conveyor unit (5) or conveying a food product in a conveying direction (DC) from a product inlet (7) to a product outlet (9), the conveyor unit (5) comprising at least one conveyor (11),
a liquid coating unit (202) configured to form at least one coating material curtain flowing from the liquid coating unit (202) to the conveyor (11);
a bed (33) extending at least along a section of the conveyor (11) in the conveying direction (DC), wherein the bed (33) defines a basin (210) for forming a liquid batter pool,
wherein the conveyor unit (5) extends through the basin (210), wherein the wet coating module (202) further comprises a level adjustment unit for controlling a surface level of the liquid batter pool formed in the basin (210).

15. A coating system (300) comprising a dry coating module (1), in particular a dry coating module (1) according to any of claims 1 to 13, a wet coating module (200), in particular a wet coating module (200) according to claim 14, and a control device for controlling both the dry coating module (1) and the wet coating module (200).
